# EUROPÄISCHE PATENTSCHRIFT

(11) **EP 3 738 790 B1**
(45) Veröffentlichungstag und Bekanntmachung des Hinweises auf die Patenterteilung: **26.01.2022**
(21) Anmeldenummer: 20166193.1
(22) Anmeldetag: 27.03.2020
(51) Int. Cl.: B60C 9/00, B60C 9/18, B60C 9/22, D02G 3/48, B60C 9/04

(54) **FESTIGKEITSTRÄGERLAGE EINES FAHRZEUGLUFTREIFENS**
REINFORCEMENT FOR A PNEUMATIC VEHICLE TYRE
NAPPE DE RENFORCEMENT D'UN PNEU DE VÉHICULE

(30) Priorität: 15.05.2019 DE 102019207019
(43) Veröffentlichungstag der Anmeldung: 18.11.2020
(73) Patentinhaber: Continental Reifen Deutschland GmbH, 30165 Hannover (DE)
(72) Erfinder: Reese, Wolfgang, 30419 Hannover (DE)
(74) Vertreter: Continental Corporation

(56) Entgegenhaltungen:
- EP-A1- 3 147 138
- EP-A1- 3 254 871
- WO-A1-01/18291
- WO-A1-01/76892
- WO-A1-03/064744
- DE-A1- 1 444 141
- US-A1- 2016 082 787

## Beschreibung

Die Erfindung betrifft eine Festigkeitsträgerlage eines Fahrzeugluftreifens, insbesondere Festigkeitsträgerlage einer Karkasse, wobei die Festigkeitsträgerlage einen Festigkeitsträger mit zumindest einem PES-Garn aus miteinander verdrehten Filamenten aus einem Polyester (PES) aufweist.

Ein "Garn" ist im Rahmen der vorliegenden Erfindung in Anlehnung an die DIN 60900 ein linienförmiges Gebilde, das aus mehreren einzelnen Filamenten, d.h. Endlosfasern, besteht. Die Filamente des Garns sind miteinander verdreht. Im Rahmen der vorliegenden Erfindung stellen "Korde" linienförmige Gebilde dar, die aus zwei oder mehr miteinander endverdrehten Garnen bestehen.

Die "Feinheit" eines Garns oder eines Kords ist ein Maß für dessen Gewicht pro Länge.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit einer Gürtelbandage ganz oder teilweise abgedeckt ist. Die Gürtelbandage kann ein- oder mehrlagig ausgebildet sein und deckt üblicherweise zumindest die Gürtelkanten ab. Die Gürtelbandage enthält üblicherweise parallel und im Wesentlichen in Umfangsrichtung verlaufende Festigkeitsträger, die in Gummi eingebettet sind. Auf einer vom Wulstkern abgewandten Seite der Karkasse kann im Wulstbereich eine zumindest eine Festigkeitsträgerlage aufweisende Wulstverstärkung angebracht sein.

Solche Festigkeitsträgerlagen für Fahrzeugluftreifen, sind dem Fachmann in Aufbau und Werkstoff in verschiedensten Ausführungen bekannt. Die Festigkeitsträger werden, beispielsweise durch Kalandrieren, in eine Kautschukmischung eingebettet, um als gummierte Festigkeitsträgerlage im Fahrzeugluftreifen eingesetzt werden zu können.

Es kann sich dabei um eine Festigkeitsträgerlage eines Fahrzeugluftreifens, insbesondere für die Karkasse und/oder die Gürtelbandage und/oder den Wulstbereich, handeln.

In PKW-Radialreifen verlaufen die Festigkeitsträger der meist einlagigen Karkasse in radialer Richtung. Die Festigkeitsträger einer Festigkeitsträgerlage der Karkasse müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion eines Festigkeitsträgers. Der radiale Verlauf der Festigkeitsträger erhöht die Festigkeitseigenschaften der Lage und verbessert die Tragfähigkeit und die Komfortmerkmale des Reifens wie Einfederung und Fahrverhalten.

Als Material für die Festigkeitsträger insbesondere der Karkasse, ist es bekannt, Festigkeitsträger aufweisend zumindest ein Garn aus einem Polyester (PES) zu verwenden. Polyester weisen einen insbesondere für die Verwendung in der Karkasse vorteilhafte hohe Festigkeit sowie einen geringen Thermoschrumpf auf. Festigkeitsträger aufweisend Garne aus PES können auch für andere Festigkeitsträgerlagen vorteilhaft sein, insbesondere für eine Gürtelbandage und/oder eine Wulstverstärkung.

Die Gürtelbandage verhindert eine Erhebung des Reifens durch die im Fahrbetrieb, insbesondere im Hochgeschwindigkeitseinsatz, auftretenden Fliehkräfte. Die Gürtelbandage wird bei der Reifenherstellung in Form von Lagen, Streifen oder Einzel-Festigkeitsträgern mit in eine unvulkanisierte Kautschukmischung eingebetteten

Festigkeitsträgern aufgebracht, die auf den Gürtel gewickelt oder gespult werden. Dokument WO03064744 offenbart eine Festigkeitsträgerlage für einen Fahrzeugluftreifen, bei der der Festigkeitsträger ein einziges Garn aus Polyester aufweist.

In der Regel sind Garne mit bestimmten handelsüblichen Filamentdichten allgemein marktverfügbar. Eine handelsübliche Filamentdichte für Garne aus PES ist beispielsweise eine Filamentdichte von in etwa 2,5 Filamente/tex, wobei die Filamentdichte die Anzahl an Filamenten pro Feinheit des Garns angibt.

An die Festigkeitsträger von Fahrzeugluftreifen werden vielfältige Anforderungen gestellt, die je nach Einsatz der Festigkeitsträger unterschiedlich gestaltet sein können. Das Bestreben geht dahin, die Festigkeitsträger bezüglich unterschiedlicher Anforderungen zu verbessern.

Eine dieser Anforderungen ist eine vorteilhafte Hystereseeigenschaft bei dynamischer Wechselbelastung wie sie beispielsweise bei Festigkeitsträgerlagen von Fahrzeugluftreifen im Betrieb des Fahrzeugluftreifens auftreten.

Aufgabe ist es, eine Festigkeitsträgerlage eines Fahrzeugluftreifens, insbesondere eine Festigkeitsträgerlage der Karkasse, zur Verfügung zu stellen, die verbesserte Hystereseeigenschaften bei dynamischer Wechselbelastung aufweist.

Die Aufgabe wird durch eine Festigkeitsträgerlage gemäß Anspruch 1 gelöst.

Ein solcher Festigkeitsträger weist ein PES-Garn auf, das eine stark verringerte Filamentdichte hat. Somit ist der Filamentdurchmesser der Filamente aus PES vergrößert. Bei gleichbleibender Gesamtfeinheit des Garns weist das PES-Garn somit eine stark verringerte Zahl an Filamenten aus PES auf. Hierdurch weist das PES-Garn eine stark verringerte Anzahl an Linearkontakten zwischen den einzelnen Filamenten des PES-Garns auf, wodurch sich bei dynamischer Wechselbelastung ein verringerter Hystereseverlust ergibt.

Beispielsweise führt einer Reduktion der Filamentdichte von 2,5 Filamente/tex auf 2,0 Filamente/tex bei einer angenommenen Gesamtfeinheit des PES-Garns von z.B. 1440 dtex zu einer Reduktion der Anzahl der Filamente von ca. 360 Filamenten auf ca. 288 Filamenten, was einer Reduktion um ca. 20% entspricht. Die Anzahl an Linearkontakten ist hierdurch signifikant verringert.

Somit ist ein Festigkeitsträger zur Verfügung gestellt, der bei gleichbleibenden Materialeigenschaften zusätzlich verbesserte Hystereseeigenschaften bei dynamischer Wechselbelastung, wie sie beispielsweise bei Festigkeitsträgern von Festigkeitsträgerlagen von Fahrzeugluftreifen, insbesondere bei Festigkeitsträgern der Karkasse, auftritt, aufweist.

Eine vorteilhafte Ausführungsform ist dadurch gegeben, dass das PES-Garn eine Filamentdichte von 1,0 Filamente/tex bis 2,0 Filamente/tex aufweist.

Bei einer Filamentdichte von unter 1,0 Filamente/tex kann durch den stark vergrößerten Filamentdurchmesser ein negativer Effekt in der Ermüdungsbeständigkeit entstehen.

Bei dem Polyester (PES) kann es sich um Polyethylenterephthalat (PET) handeln. PET weist eine sehr gute Marktverfügbarkeit auf und ist kostengünstig. Es kann recyceltes PET sein, wodurch die Nachhaltigkeit der Festigkeitsträgerlage steigt.

Bei dem Polyester (PES) kann es sich aber auch um Polyethylennaphthalat (PEN) handeln. PEN weist einen vorteilhaften höheren Elastizitätsmodul auf.

Eine vorteilhafte Ausführungsform ist dadurch gegeben, dass das PES-Garn eine Feinheit von 200 dtex bis 4000 dtex aufweist.

Garne einer solchen Feinheit eignen sich hervorragend für Festigkeitsträger von Fahrzeugluftreifen. Eine hohe Marktverfügbarkeit weisen etwa PET-Garne der Feinheit 1100 dtex, 1440 dtex, 1670 dtex und 2200 dtex auf. Vorteilhaft sind auch dünnere PET-Garne der Feinheit 550 dtex oder 720 dtex.

Entsprechend der Erfindung weist der Festigkeitsträger genau ein Garn auf, wobei das genau eine Garn das PES-Garn ist. Ein solcher Festigkeitsträger weist eine besonders einfache Konstruktion auf und ist kostengünstig in seiner Herstellung.

Erfindungsgemäß weist das PES-Garn einen Twist-Faktor α von 35 bis 75 auf. Der Twist-Faktor α ist dabei definiert als α = Verdrehungszahl [T/m] · (Feinheit [tex]/ 1000 )^{1/2}. Die Verdrehungszahl ist in Umdrehungen pro Meter (Turns per meter) angegeben. Das PES-Garn aufweisend einen solchen Twist-Faktor zeichnet sich durch eine vorteilhafte Ermüdungsbeständigkeit aus.

Eine andere, nicht erfindungsgemäße Ausführungsform ist dadurch gegeben, dass der Festigkeitsträger ein Kord aus zumindest zwei miteinander endverdrehten Garnen ist, wobei zumindest eines, bevorzugt alle, der Garne ein PES-Garn ist.

Korde aus zumindest zwei miteinander endverdrehten Garnen sind übliche Festigkeitsträger von Fahrzeugluftreifen. Eine besonders einfache Konstruktion ergibt sich, wenn alle Garne des Kordes PES-Garne sind.

In einer weiteren nicht erfindungsgemäßen Ausführungsform weist der Kord genau zwei Garne auf. Besonders zweckmäßig ist es, wenn beide Garne PES-Garne sind. Sind beide Garne PET-Garne, so ist etwa die Konstruktion 550 dtex x 2, 720 dtex x 2, 1100 dtex x 2, 1440 dtex x 2, 1670 dtex x 2, 2200 dtex x 2 oder 3340 dtex x 2 vorteilhaft.

Vorteilhaft ist es dabei, wenn der Kord genau zwei Garne und einen Twist-Faktor α von 100 bis 250 aufweist.

Der Twist-Faktor α ist dabei definiert als α = Verdrehungszahl [T/m] · (Feinheit [tex]/ 1000 )^{1/2}, wobei die Feinheit die Gesamtfeinheit des Kordes, d.h. die kumulierte Feinheit der beiden Garne, ist. Die Verdrehungszahl ist in Umdrehungen pro Meter (Turns per meter) angegeben. Der Kord aufweisend einen solchen Twist-Faktor zeichnet sich durch eine vorteilhafte Ermüdungsbeständigkeit aus.

Um eine zuverlässige Haftung von textilen Festigkeitsträgern zum Gummi zu gewährleisten, ist es zweckmäßig, die Festigkeitsträger mit einer Haftimprägnierung, z.B. mit einem RFL-Dip im 1- oder 2-Bad-Verfahren, zu versehen. Es sind aber auch alle weiteren dem Fachmann bekannten Verfahren und Haftmittel zur Imprägnierung denkbar.

Die Erfindung betrifft insbesondere eine Festigkeitsträgerlage der Gürtelbandage und/oder der Karkasse und/oder der Wulstverstärkung. Eine solche Festigkeitsträgerlage weist verbesserte Hystereseeigenschaften bei dynamischer Wechselbelastung, wie sie im Betrieb des Reifens auftreten, auf.

Besonders vorteilhaft ist eine solche Festigkeitsträgerlage als Lage der Karkasse, da hierbei die Materialeigenschaften der Fasern aus PES, insbesondere aus PET oder aus PEN, wie eine vorteilhafte Festigkeit, besonders vorteilhaft sind.

Eine solche Festigkeitsträgerlage ist auch für die Gürtelbandage und/oder die Wulstverstärkung vorteilhaft.

Die Erfindung umfasst auch einen Fahrzeugluftreifen aufweisend zumindest eine erfindungsgemäße Festigkeitsträgerlage.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen Fahrzeugluftreifen;
Fig. 2 ein PES-Garn;
Fig. 3 einen Festigkeitsträger;
Fig. 4 eine Festigkeitsträgerlage.

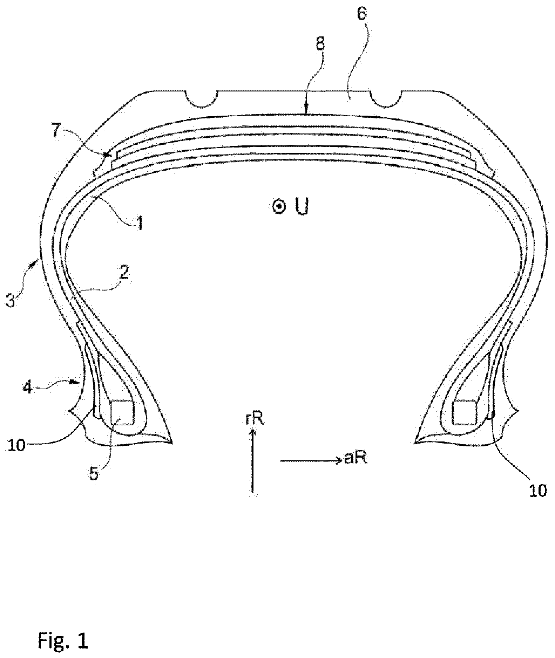

Die Figur 1 zeigt einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage 9 umfassende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten beinhaltenden Gürtel 7, welcher radial außen mit der zumindest eine Festigkeitsträgerlage 9 umfassenden Gürtelbandage 8 abgedeckt ist. Der Fahrzeugluftreifen kann einen Wulstverstärker 10 aufweisen. Der Wulstverstärker 10 ist ganz oder teilweise im Wulstbereich 4 angeordnet. Der Wulstverstärker 10 ist axial außerhalb und anschließend an die Karkasse 2 positioniert. Der Wulstverstärker 10 beinhaltet zumindest eine Festigkeitsträgerlage 9, welche ringkreisförmig im Bereich des Wulstes um den Reifen umläuft.

Bei Fahrzeugluftreifen in wie in Fig. 1 gezeigter radialer Bauart sind die Festigkeitsträger einer Festigkeitsträgerlage 9 der Karkasse 2 in etwa parallel zueinander in etwa in radialer Richtung angeordnet. Die Festigkeitsträgerlage 9 der Gürtelbandage 8 beinhaltet einen oder mehrere Festigkeitsträger, der oder die kontinuierlich entlang der axialen Breite gewickelt ist oder sind.

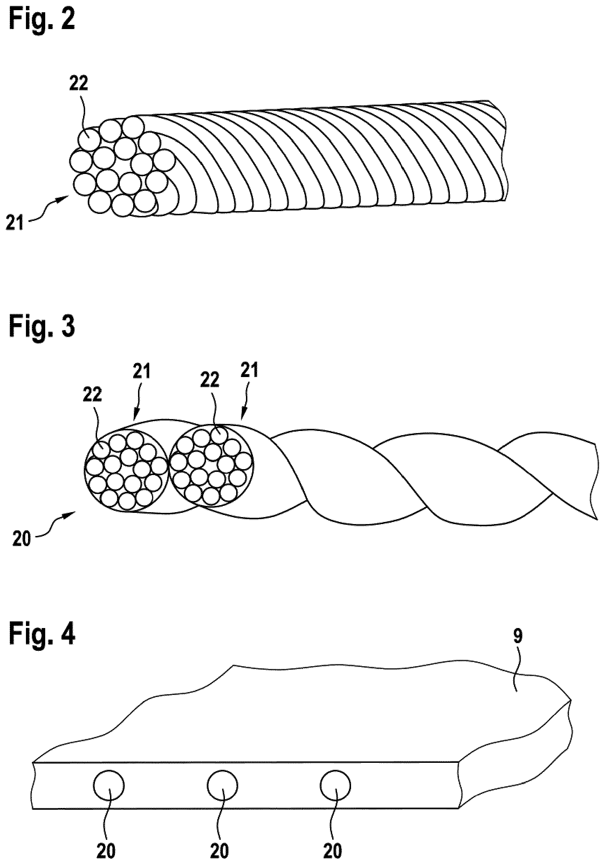

Eine oder mehrere Festigkeitsträgerlagen der Gürtelbandage 8 und/oder der Karkasse 2 und/oder der Wulstverstärkung 10, bevorzugt der Karkasse 2, kann/können eine erfindungsgemäße Festigkeitsträgerlage 10 aufweisen. Eine derartige Festigkeitsträgerlage 9 ist in der Figur 4 dargestellt.

Die erfindungsgemäße Festigkeitsträgerlage 9 weist einen Festigkeitsträger 20 auf, welcher ein PES-Garn 21 aus miteinander verdrehten Filamenten 22 aus PES mit einer Filamentdichte von maximal 2,0 Filamente/tex aufweist, wobei die Filamentdichte die Anzahl an Filamenten 22 bezogen auf die Feinheit des PES-Garns angibt. Bevorzugt weist das PES-Garn eine Filamentdichte von 1,0 Filamente/tex bis 2,0 Filamente/tex auf.

Bei dem Polyester (PES) kann es sich um Polyethylenterephthalat (PET) handeln. Es kann sich um recyceltes PET handeln.

Es kann sich bei dem Polyester (PES) aber auch um Polyethylennaphthalat (PEN) handeln.

Die Figur 2 zeigt ein derartiges PES-Garn 22, wobei die gezeichnete Anzahl der Filamente 21 der Veranschaulichung dient.

Die Feinheit des PES-Garns 21 beträgt 200 dtex bis 4000 dtex.

Der Festigkeitsträger 20 für eine Festigkeitsträgerlage 9 des Fahrzeugluftreifens weist erfindungsgemäß genau ein Garn auf, wobei das genau eine Garn ein solches PES-Garn 21 ist. Das PES-Garn weist erfindungsgemäß einen Twist-Faktor α von 35 bis 75 auf.

In einer nicht erfindungsgemäßen Ausführungsform ist der Festigkeitsträger 20 für eine Festigkeitsträgerlage 9 des Fahrzeugluftreifens ein Kord aus zumindest zwei miteinander endverdrehten Garnen, wobei zumindest eines, bevorzugt alle, der Garne das PES-Garn 21 ist.

Die Figur 3 zeigt eine nicht erfindungsgemäße Ausführungsform eines derartigen Festigkeitsträgers 20. Der Festigkeitsträger 20 ist dabei ein Kord aus zwei miteinander endverdrehten PES-Garnen 21. Bei den PES-Garnen 21 kann es sich jeweils um einen in der Figur 2 gezeigtes PES-Garn 21 handeln. Der Kord kann dabei die Konstruktion 1440 dtex x 2 aufweisen. Der Kord kann dabei einen Twist-Faktor α von 100 bis 250 aufweisen. Die Figur 4 zeigt eine erfindungsgemäße Festigkeitsträgerlage 9 aufweisend zumindest einen Festigkeitsträger 20 eines Fahrzeugluftreifens. Es kann sich um eine Festigkeitsträgerlage 9 der in der Figur 1 gezeigten Gürtelbandage 8 und/oder Karkasse 2 und/oder Wulstverstärkung 10 handeln. Der Festigkeitsträger 20 kann der in der Figur 2 gezeigte Festigkeitsträger 20 sein. Eine solche Festigkeitsträgerlage 9 eignet sich hervorragend für eine Karkasse 2.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Festigkeitsträgerlage
- 10: Wulstverstärker
- 20: Festigkeitsträger
- 21: PES-Garn
- 22: Filament

## Patentansprüche

1. Festigkeitsträgerlage (9) für einen Fahrzeugluftreifen, insbesondere Festigkeitsträgerlage (9) einer Karkasse (2), wobei die Festigkeitsträgerlage (9) einen Festigkeitsträger (20) mit zumindest einem PES-Garn (21) aus miteinander verdrehten Filamenten (22) aus einem Polyester (PES) aufweist,
wobei das PES-Garn (21) eine Filamentdichte von maximal 2,0 Filamente/tex aufweist, wobei die Filamentdichte die Anzahl an Filamenten (22) bezogen auf die Feinheit des PES-Garns (21) angibt,
dass der Festigkeitsträger (20) genau ein Garn aufweist, wobei das genau eine Garn das PES-Garn (21) ist,
**dadurch gekennzeichnet, dass**
das PES-Garn (21) einen Twist-Faktor α von 35 bis 75 aufweist.

2. Festigkeitsträgerlage (9) nach Anspruch 1, **dadurch gekennzeichnet, dass** das PES-Garn (21) eine Filamentdichte von 1,0 Filamente/tex bis 2,0 Filamente/tex aufweist.

3. Festigkeitsträgerlage (9) nach einem oder mehreren der vorhergehenden Ansprüche, **dadurch gekennzeichnet, dass** es sich bei dem Polyester um Polyethylenterephthalat (PET), insbesondere um recyceltes PET, handelt.

4. Festigkeitsträgerlage (9) nach einem oder mehreren der vorhergehenden Ansprüche, **dadurch gekennzeichnet, dass** es sich bei dem Polyester um Polyethylennaphthalat (PEN) handelt.

5. Festigkeitsträgerlage (9) nach einem oder mehreren der vorhergehenden Ansprüche, **dadurch gekennzeichnet, dass** das PES-Garn (21) eine Feinheit von 200 dtex bis 4000 dtex aufweist.

6. Fahrzeugluftreifen aufweisend eine Festigkeitsträgerlage (9) gemäß zumindest einem der Ansprüche 1 bis 5, wobei die Festigkeitsträgerlage die Festigkeitsträgerlage einer Gürtelbandage (8) ist.

7. Fahrzeugluftreifen aufweisend eine Festigkeitsträgerlage (9) gemäß zumindest einem der Ansprüche 1 bis 5, wobei die Festigkeitsträgerlage die Festigkeitsträgerlage einer Karkasse (2) ist.

8. Fahrzeugluftreifen aufweisend eine Festigkeitsträgerlage (9) gemäß zumindest einem der Ansprüche 1 bis 5, wobei die Festigkeitsträgerlage die Festigkeitsträgerlage einer Wulstverstärkung (10) ist.

## Claims

1. Reinforcement layer (9) for a pneumatic vehicle tyre, in particular a reinforcement layer (9) of a carcass (2), the reinforcement layer (9) having a reinforcement (20) comprising at least one PES yarn (21) of twisted-together filaments (22) of a polyester (PES),
the PES yarn (21) having a maximum filament density of 2.0 filaments/tex, the filament density indicating the number of filaments (22) with respect to the fineness of the PES yarn (21)
the reinforcement (20) having just one yarn, the just one yarn being the PES yarn (21),
**characterized in that**
the PES yarn (21) has a twist factor α of 35 to 75.

2. Reinforcement layer (9) according to Claim 1, **characterized in that** the PES yarn (21) has a filament density of 1.0 filaments/tex to 2.0 filaments/tex.

3. Reinforcement layer (9) according to one or more of the preceding claims, **characterized in that** the polyester is polyethylene terephthalate (PET), in particular recycled PET.

4. Reinforcement layer (9) according to one or more of the preceding claims, **characterized in that** the polyester is polyethylene naphthalate (PEN).

5. Reinforcement layer (9) according to one or more of the preceding claims, **characterized in that** the PES yarn (21) has a fineness of 200 dtex to 4000 dtex.

6. Pneumatic vehicle tyre having a reinforcement layer (9) according to at least one of Claims 1 to 5, the reinforcement layer being the reinforcement layer of a belt bandage (8).

7. Pneumatic vehicle tyre having a reinforcement layer (9) according to at least one of Claims 1 to 5, the reinforcement layer being the reinforcement layer of a carcass (2).

8. Pneumatic vehicle tyre having a reinforcement layer (9) according to at least one of Claims 1 to 5, the reinforcement layer being the reinforcement layer of a bead reinforcement (10).

## Revendications

1. Couche de renfort (9) d'un pneumatique de véhicule, en particulier couche de renfort (9) d'une carcasse (2), la couche de renfort (9) comportant un renfort (20) pourvu d'au moins un fil PES (21) formé de filaments (22) de polyester (PES) torsadés entre eux,
le fil PES (21) ayant une densité de filaments de 2,0 filaments/tex maximum, la densité de filaments indiquant le nombre de filaments (22) sur la base de la finesse du fil PES (21),
le renfort (20) ayant exactement un fil, l'exactement un fil étant le fil PES (21),
**caractérisée en ce que**
le fil PES (21) a un facteur de torsion α de 35 à 75.

2. Couche de renfort (9) selon la revendication 1, **caractérisée en ce que** le fil PES (21) a une densité de filaments de 1,0 filaments/tex à 2,0 filaments/tex.

3. Couche de renfort (9) selon une ou plusieurs des revendications précédentes, **caractérisée en ce que** le polyester est du polyéthylène téréphtalate (PET), notamment du PET recyclé.

4. Couche de renfort (9) selon une ou plusieurs des revendications précédentes, **caractérisée en ce que** le polyester est du polyéthylène naphtalate (PEN).

5. Couche de renfort (9) selon une ou plusieurs des revendications précédentes, **caractérisée en ce que** le fil PES (21) a une finesse de 200 dtex à 4000 dtex.

6. Pneumatique de véhicule comportant une couche de renfort (9) selon l'une au moins des revendications 1 à 5, la couche de renfort étant la couche de renfort d'un bandage de ceinture (8).

7. Pneumatique de véhicule comportant une couche de renfort (9) selon l'une au moins des revendications 1 à 5, la couche de renfort étant la couche de renfort d'une carcasse (2).

8. Pneumatique de véhicule comportant une couche de renfort (9) selon l'une au moins des revendications 1 à 5, la couche de renfort étant la couche de renfort d'un renforcement de talon (10).
